# FASCICULE DE BREVET EUROPEEN

(11) **EP 1 526 319 B1**
(45) Date de publication et mention de la délivrance du brevet: **23.05.2007**
(21) Numéro de dépôt: 04356169.5
(22) Date de dépôt: 21.10.2004
(51) Int. Cl.: F16L 37/086, B67D 5/378, B60K 15/04

(54) **Dispositif de remplissage de réservoir de véhicule en carburant liquide**
Vorrichtung zur Befüllung eines Fahrzeuges mit Flüssigem Krafstoff
Liquid fuel filling device for vehicle

(30) Priorité: 22.10.2003 FR 0312342
(43) Date de publication de la demande: 27.04.2005
(73) Titulaire: STAUBLI FAVERGES, 74210 Faverges (FR)
(72) Inventeur: Tiberghien, Alain-Christophe, 74320 Sevrier (FR); Durieux, Christophe, 73200 Gilly sur Isère (FR)
(74) Mandataire: Myon, Gérard Jean-Pierre

(56) Documents cités:
- EP-A- 0 487 844
- US-A- 4 059 135
- US-A- 5 634 505
- US-A1- 2002 175 227

## Description

L'invention a trait à un dispositif de remplissage de réservoir de véhicule en carburant liquide.

L'invention relève particulièrement du domaine de la compétition automobile dans lequel il est parfois nécessaire de procéder au remplissage du réservoir de carburant d'un véhicule en cours de compétition, ce remplissage devant avoir lieu dans des conditions optimales de sécurité et dans un minimum de temps.

Les matériels utilisés jusqu'à ce jour n'apportent pas les garanties suffisantes en matière de sécurité. Il s'avère en effet qu'ils sont sujet aux fuites, ce qui induit des risques non négligeables d'incendie dans la mesure où le moteur du véhicule de compétition fonctionne souvent à très haute température. En outre, les matériels connus sont lourds et relativement difficiles à manipuler, ce qui induit un temps de remplissage de réservoir relativement important pouvant pénaliser sensiblement le concurrent en cours d'épreuve.

Un risque particulier de ce genre de matériel est que l'opérateur en charge du remplissage d'un réservoir peut tenter de déverser un carburant alors même que l'élément de remplissage qu'il a en main n'est pas correctement raccordé à l'embout correspondant prévu sur le véhicule.

C'est à ces inconvénients qu'entend plus particulièrement remédier l'invention en proposant un nouveau dispositif de remplissage de réservoir de véhicule en carburant liquide dont la mise en oeuvre est sécurisée, alors qu'il permet un écoulement avec un débit important compatible à ceux recherchés, notamment, dans le domaine des compétitions automobiles.

Dans cet esprit, l'invention concerne un dispositif de remplissage de réservoir de véhicule en carburant liquide, ce dispositif comprenant un about embarqué sur le véhicule, relié au réservoir au moins par un conduit de déversement et pourvu d'un clapet d'obturation, et un élément de remplissage apte à être raccordé sur cet about. Ce dispositif est caractérisé en ce que l'élément de remplissage est pourvu d'au moins un organe de détection de l'appui de l'élément de remplissage sur une partie fixe de l'about, cet organe de détection étant apte, lorsque ledit élément de remplissage est en appui sur ladite partie fixe, à commander le déplacement d'un crochet de verrouillage de l'élément de remplissage sur l'about, entre une première position où le crochet est dégagé par rapport à l'about et une seconde position où le crochet est en prise sur cet about.

Grâce à l'invention, le passage du crochet de verrouillage de sa position dégagée vers sa position en prise sur l'about a lieu en fonction de la détection de l'appui de l'élément de remplissage sur l'about, ce qui évite les erreurs de manipulation dans la mesure où, tant que l'appui n'est pas correct, le crochet de verrouillage ne peut pas atteindre sa seconde position.

Selon des aspects avantageux mais non obligatoires, un dispositif de remplissage de réservoir peut incorporer une ou plusieurs des caractéristiques suivantes, prises dans toute combinaison techniquement admissible :
- Plusieurs organes de détection sont répartis autour d'un axe central de l'élément de remplissage et aptes, chacun, à commander un crochet de verrouillage.
- Le ou chaque organe de détection est en forme de doigt mobile en translation selon une direction globalement parallèle à un axe central de l'élément de remplissage.
- Le ou chaque crochet de verrouillage est apte à empêcher le déplacement d'une bague de verrouillage lorsqu'il n'est pas en prise avec l'about, cette bague étant elle-même apte à empêcher le déplacement d'un organe de commande faisant partie de l'élément de remplissage et mobile, par rapport au corps de cet élément, parallèlement à un axe central de cet élément.
- La bague de verrouillage est apte à entourer le ou les crochets et, éventuellement, une partie de l'about lorsque ce ou ces crochet(s) est ou sont dans la seconde position précitée.
- La liaison cinématique entre la bague de verrouillage et l'organe de commande est fonction de la position de l'organe par rapport au corps de l'élément de remplissage. Dans ce cas, un élément de blocage du mouvement relatif de la bague de verrouillage et de l'organe de commande est avantageusement prévu, cet élément de blocage étant reçu dans un logement ménagé à cet effet dont la bague est apte à être partiellement engagée ou non dans un logement ménagé à cet effet dans l'organe de commande.
- L'élément de remplissage comprend un tiroir en forme de manchon tubulaire apte à venir en appui contre un joint prévu sur une surface radiale interne de l'about, le déplacement du tiroir par rapport au corps de l'élément de remplissage étant commandé par l'organe de commande précité. On peut prévoir que la liaison cinématique entre le tiroir et l'organe de commande est fonction de la position de cet organe par rapport au corps de l'élément de remplissage.
- L'about est pourvu d'une gorge périphérique externe de réception d'une partie du ou des crochets de verrouillage lorsqu'il est ou lorsqu'ils sont dans la seconde position précitée.
- L'about est relié au réservoir par un conduit d'écoulement de carburant et par un conduit de circulation d'évents, alors qu'un organe mobile est apte à passer, à l'intérieur de cet about, d'une première configuration où l'organe mobile permet une communication fluidique entre ces conduits et une seconde configuration où cet organe isole ces conduits l'un de l'autre. L'organe mobile est avantageusement apte à être déplacé de sa première vers sa seconde configuration par une partie de l'élément de remplissage. Dans ce cas, on peut prévoir que l'organe mobile est apte à être déplacé de sa première vers sa seconde configuration par un poussoir solidaire de l'organe de commande et apte à repousser le clapet de l'about à l'encontre de moyens élastiques de fermeture, ce clapet étant lui-même apte à déplacer cet organe mobile.
- L'élément de remplissage forme deux conduits dédiés respectivement à l'écoulement de carburant vers le réservoir et à la circulation d'évents provenant du réservoir, alors que l'about est lui-même raccordé au réservoir par deux conduits dédiés respectivement à l'écoulement de carburant et à la circulation d'évents, les conduits d'écoulement de carburant étant aptes à être fluidiquement raccordés, alors que les conduits de circulation d'évents sont aptes à être fluidiquement raccordés.
- Les mouvements des parties de l'élément de remplissage qui sont mobiles par rapport au corps de cet élément sont commandés par au moins une poignée articulée sur ce corps autour d'un axe globalement orthogonal à la direction de déplacement de cette partie mobile. Dans ce cas, cette poignée est avantageusement équipée d'un galet de transmission d'effort à l'une de ces parties mobiles, ce galet étant reçu, avec possibilité de déplacement, dans un logement de forme correspondante, ménagé dans cette partie mobile.
- Il est prévu des moyens de rappel élastique de certaines au moins des parties de l'élément de remplissage mobiles par rapport à son corps et/ou de certaines au moins des parties de l'about mobile par rapport à la partie fixe précitée, ces moyens de rappel repoussant ces parties mobiles vers une configuration de fermeture et de séparation de l'élément de remplissage et de l'about.

L'invention sera mieux comprise et d'autres avantages de celle-ci apparaîtront plus clairement à la lumière de la description qui va suivre d'un mode de réalisation d'un dispositif conforme à son principe, donnée uniquement à titre d'exemple et faite en référence aux dessins annexés dans lesquels :
- la figure 1 est une vue de côté d'un dispositif conforme à l'invention dont une partie est installée sur un véhicule automobile représenté partiellement en coupe ;
- la figure 2 est une coupe selon le plan II à la figure 1 ;
- la figure 3 est une coupe à plus grande échelle du détail III à la figure 2 lorsque l'élément de remplissage arrive en appui contre l'about ;
- la figure 4 est une vue analogue à la figure 3, mais à plus petite échelle, lors d'une étape suivante de la mise en place de l'élément de remplissage ;
- la figure 5 est une vue analogue à la figure 4 lors d'une autre étape suivante et
- la figure 6 est une vue analogue à la figure 3 lorsque l'élément de remplissage et l'about sont en communication fluidique établie, avec extension de la vue vers le bas de la figure 2.

Le dispositif D représenté sur les figures est un raccord comprenant un about A destiné à être fixé sur un véhicule automobile et un élément de remplissage E destiné à être manipulé par un opérateur pour une opération de remplissage du réservoir R de ce véhicule.

L'about A comprend un corps 1 destiné à être fixé sur un véhicule automobile en faisant légèrement saillie par rapport à la carrosserie C de ce véhicule.

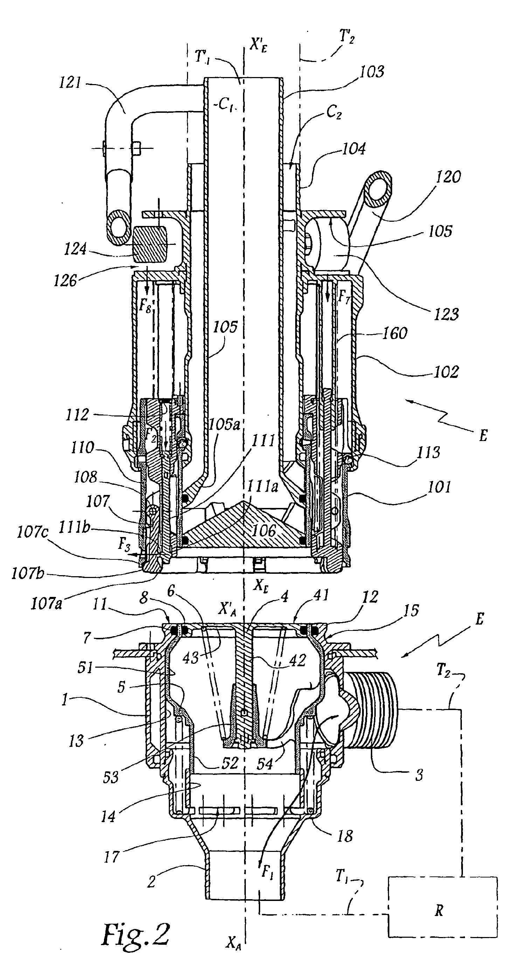

Le corps 1 définit deux piquages 2 et 3 sur lesquels peuvent être respectivement raccordés un tuyau T₁ d'écoulement du carburant jusque dans le réservoir R et un tuyau T₂ d'écoulement d'évents en provenance du réservoir R. Pour la clarté du dessin, le réservoir R et les tuyaux T₁ et T₂ sont représentés uniquement à la figure 2.

A la présence près du piquage 3, l'about A est symétrique autour d'un axe X_{A}-X'_{A} vertical sur les figures.

Le corps 1 de l'about A renferme un clapet 4 dont la face externe 41 est affleurante avec une surface annulaire 11 formée par le col 12 du corps 1 qui fait saillie au-delà de la carrosserie C. La surface 11 est perpendiculaire à l'axe X_{A}-X'_{A}.

Le corps 1 renferme également une douille 5 qui est pourvue d'une partie 51 de diamètre extérieur légèrement inférieur au diamètre de la surface interne 13 du corps 11. La douille 5 comprend également une partie resserrée 52 dont le diamètre extérieur correspondant sensiblement au diamètre interne d'un manchon 14 défini par le corps 1.

Ainsi, la douille 5 est guidée en translation par rapport au corps 1, du fait de la coopération des parties 51 et 52 respectivement avec les zones 13 et 14 du corps 1.

La douille 51 définit également un manchon central 53 dans lequel est guidée la tige 42 du clapet 4.

Un ressort de rappel 6 est disposé entre la face interne 43 du clapet 4 et une zone d'appui formée au pied du manchon 53, lequel manchon est relié à la partie 51 de la douille 5 par plusieurs pattes dont une seule est visible sur les figures avec la référence 54.

Lorsque le clapet 4 et la douille 5 sont dans la configuration de la figure 2, le volume interne du corps 1 est isolé de l'extérieur, alors que les piquages 2 et 3 communiquent entre eux, comme représentés par la double flèche F₁.

Un joint torique 7 est monté dans une gorge ménagée dans la surface radiale interne du corps 12. Un autre joint torique 8 est monté dans une gorge ménagée sur la surface périphérique du clapet 4. Une partie de la douille 5 est disposée entre les joints 7 et 8 dans la configuration de la figure 2.

L'élément de remplissage E comprend, quant à lui, un corps 101 globalement symétrique autour d'un axe X_{E}-X'_{E} et par rapport auquel est mobile une bague de commande 102 qui définit deux conduits concentriques C₁ et C₂ dédiés respectivement à l'écoulement de carburant en direction de l'about A et à la collecte d'évents provenant de cet about.

La bague 102 est destinée à être reliée à deux tuyaux concentriques T'₁ et T'₂ et forme, pour ce faire, deux piquages 103 et 104.

On note 105 la cloison circulaire de séparation entre les conduits C₁ et C₂, cette cloison étant divergente à l'opposé du piquage 103. A proximité de la partie divergente 105a de la cloison 105, la bague 102 forme un poussoir 106 destiné à venir en appui contre la face 41 du clapet 4.

Sept crochets 107 sont articulés chacun autour d'un axe 108 globalement perpendiculaire à l'axe X_{E}-X'_{E} et sont pourvus chacun d'un bec 107a destiné à s'engager dans une gorge périphérique externe 15 ménagée sur le col 12.

Un crochet 107 est visible sur la gauche de chacune des figures 2 à 6, étant entendu que les becs 107a de certains autres crochets sont également visibles sur cette figure, alors que les autres crochets sont disposés dans la partie de l'élément E arrachée aux figures 2 à 6. En pratique, les sept crochets 107 de l'élément E sont régulièrement répartis autour de l'axe X_{E}-X'_{E}. Chaque crochet 107 est également pourvu d'un talon 107b destiné à interagir avec une bague de verrouillage 110 ainsi qu'il ressort des explications qui suivent.

A proximité de chaque crochet 107 est disposé dans le corps 101 un doigt 111 chargé élastiquement par un ressort 112 qui exerce sur ce doigt 111 un effort F₂ de rappel en position basse, c'est-à-dire un effort dirigé vers l'about A dans la configuration de la figure 2. Le doigt 111 est pourvu de deux extensions radiales 111a et 111b destinées à interagir respectivement avec une partie de guidage 101a ménagée sur le corps 101 et avec un talon 107c formé par le crochet 107 adjacent.

Dans la configuration de la figure 2, et en l'absence d'effort extérieur, le ressort 112 exerce sur le doigt 111 associé l'effort F₂ qui est tel que l'extension 111 transmet au talon 107c un effort radial dirigé vers l'extérieur F₃ ayant tendance à faire pivoter le crochet 107 radialement vers l'extérieur autour de son axe 108.

Il en est de même pour tous les doigts 111 et les crochets 107.

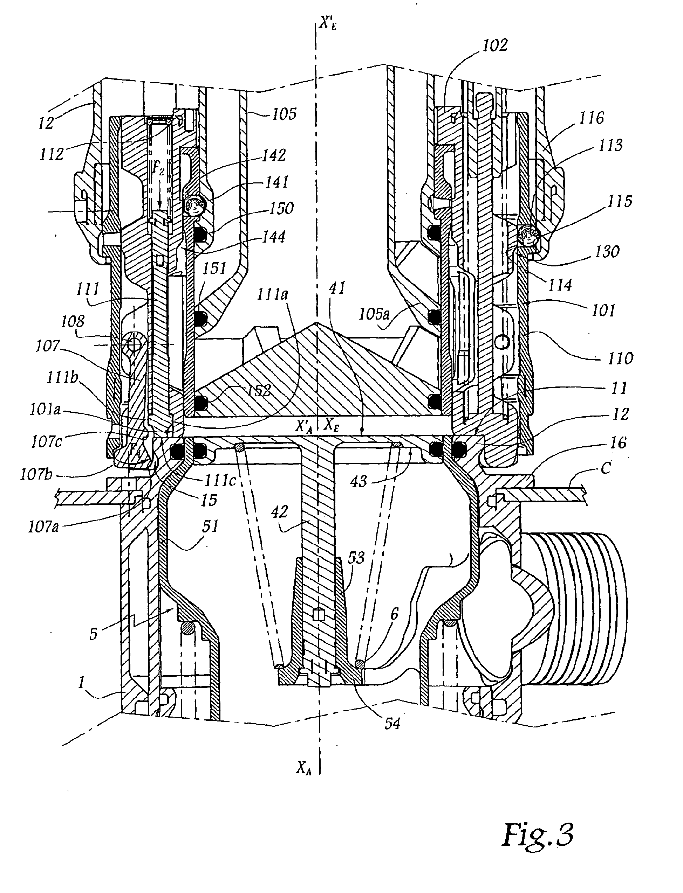

Lorsque à partir de cette position, on atteint la position de la figure 3, les crochets 107 viennent se placer autour du col 12, ce pourquoi ils ne sont pas gênés car ils sont basculés vers l'extérieur par l'effort F₃. Ensuite, et comme représenté à la figure 3, les faces d'extrémité 111c des doigts 111 viennent en appui sur la surface 11 du corps 1, ce qui les repousse, parallèlement à l'axe X_{E}-X'_{E}, à l'encontre de l'effort F₂.

L'extension 111b de chaque doigt 111 n'est alors plus en regard du talon 107c du crochet 107 adjacent dont le bec 107a peut alors s'engager dans la gorge 15 du col 12 comme représenté par la flèche F₄, ce qui permet d'obtenir un verrouillage de l'élément E sur l'about A.

On note que chaque doigt 111 assure une fonction de détection du bon appui de l'élément E sur le col 12 et permet de commander la position du crochet 107 adjacent dans la mesure où, tant qu'il n'est pas repoussé par la surface 11 du corps 1, un doigt 111 s'oppose par son extension 111b à l'engagement du bec 107a du crochet 107 dans la gorge 15.

Lorsque tous les doigts 111 ont été repoussés à l'encontre de l'effort élastique exercé par les ressorts 112 voisins, tous les crochets 107 peuvent venir s'engager dans la gorge 15 et ne s'opposent alors plus, par leurs talons 107b respectifs, aux mouvements de la bague de verrouillage 110 en direction de l'about A.

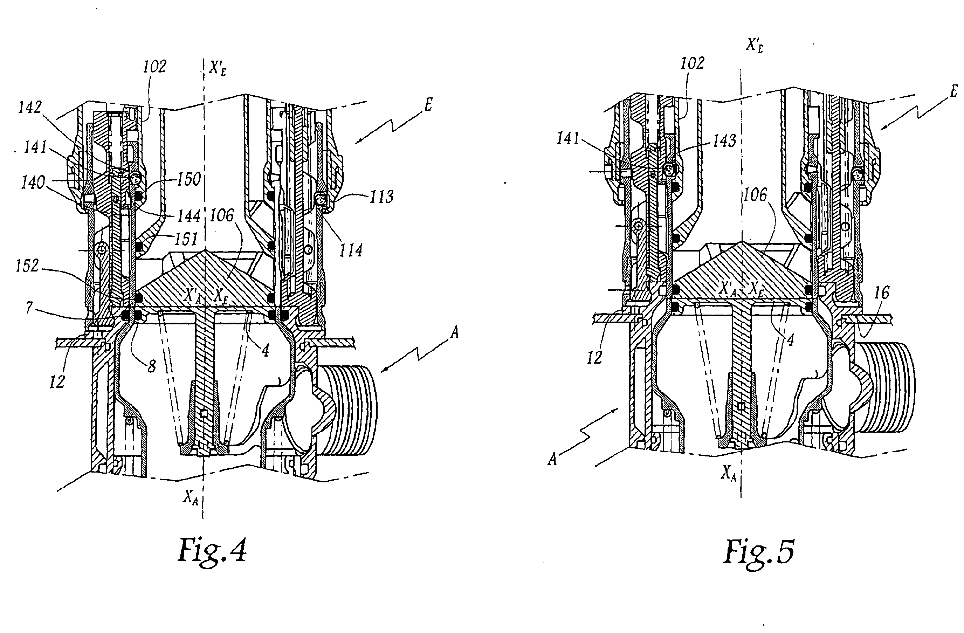

Dans la configuration de la figure 4, un appui étanche est réalisé entre l'élément E et l'about A, ce qui évite tout risque de fuite, alors même que le clapet 4 n'a pas encore été déplacé.

Le déplacement de la bague 110 en direction de l'about A est commandé grâce à la bague 102 car ces deux bagues sont solidaires en translation parallèlement à l'axe X_{E}-X'_{E} grâce à plusieurs billes 113 installées dans des logements 114 répartis autour de l'axe X_{E}-X'_{E} dans la bague 110, ces billes étant plus larges que la bague 110 et faisant saillie dans des renfoncements 115 ménagés sur la surface radiale interne d'une partie externe 116 de la bague 102.

Le déplacement de la bague de commande parallèlement à l'axe X_{E}-X'_{E} est commandé par deux poignées 120 et 121 articulées chacune sur le corps 102 autour d'un axe 122 ou équivalent perpendiculaire à l'axe X_{E}-X'_{E}.

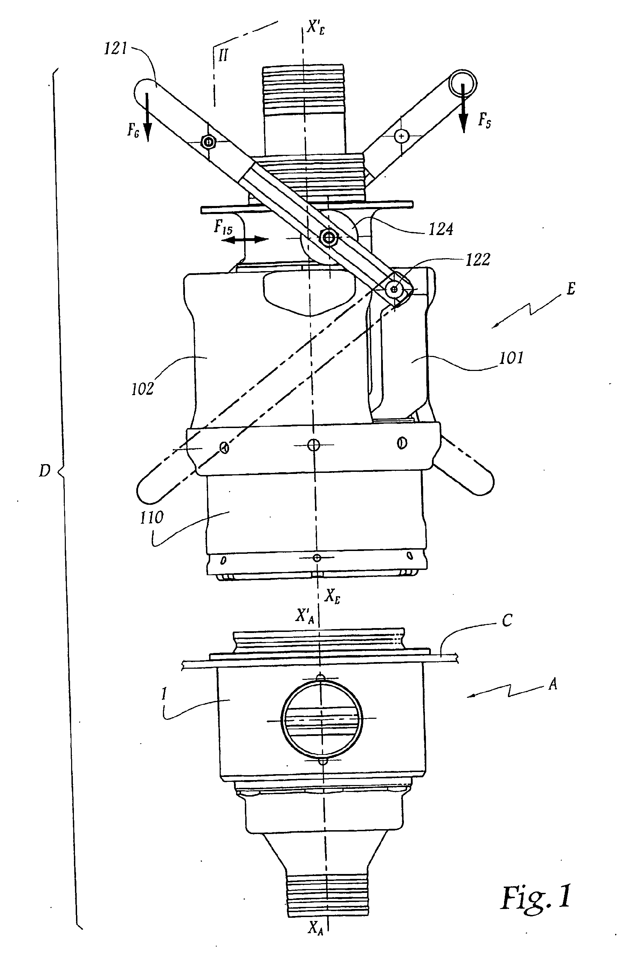

La poignée 120 porte un galet 123, alors que la poignée 121 porte un galet 124, ces galets étant chacun disposés dans un logement 125, respectivement 126, ménagé dans la surface externe de la bague 102. Les galets 123 et 124 peuvent se déplacer dans les logements 125 et 126 perpendiculairement aux directions des axes X_{E}-X'_{E} et 122, ce qui est représenté par la double flèche F₁₅ à la figure 1.

En pratique, la poignée 120 est prévue pour passer de la configuration représentée en traits pleins à celle représentée en traits mixtes à la figure 1, le galet 123 faisant alors un aller-retour dans le logement 125.

De la même façon, la poignée 121 peut atteindre une configuration basse représentée uniquement par son extrémité en traits mixtes à la figure 1.

Le passage des poignées 120 et 121 de leur configuration représentée en traits pleins à celle représentée en traits mixtes a lieu en exerçant sur celles-ci des efforts F₅ et F₆ dirigés vers l'about A lorsque l'élément E est en appui contre l'about A.

Du fait des efforts F₅ et F₆, les galets 123 et 124 exercent sur la bague 102 des efforts F₇ et F₈ qui peuvent être transmis, à travers les billes 113, à la bague de verrouillage 110.

Si l'on poursuit l'application des efforts F₅ et F₆ à partir de la configuration de la figure 4, les bagues 102 et 110 sont désolidarisées en translation car la bague 110 parvient en regard d'un renfoncement 130 ménagé dans le corps 102, de telle sorte que chaque bille 113 peut être chassée vers le renfoncement 130 adjacent, ce qui permet la poursuite du mouvement d'abaissement de la bague 102 lors du passage de la configuration de la figure 4 à celle de la figure 5, la bague 110 demeurant en appui sur une collerette radiale externe 16 du col 12.

Par ailleurs, un tiroir en forme de manchon 140 est rendu solidaire en translation de la bague 102 grâce à plusieurs billes 141 reçues dans des logements 142 du tiroir 140 répartis autour de l'axe X_{E}-X'_{E}, ces billes dépassant en direction de renfoncements 143 ménagés dans la bague 102.

Ainsi, la poursuite du mouvement de la bague de commande 102 en direction de l'about A a pour effet de déplacer également le tiroir 140 qui repousse la douille 5, alors que le poussoir 106 repousse le clapet 4.

Le tiroir 140 parvient alors jusqu'au contact du joint 7 avec lequel il assure un contact étanche, comme représenté à la figure 5.

La bague 102 est pourvue de trois joints toriques 150, 151 et 152 qui sont tous en appui contre la surface radiale interne du tiroir 140 dans les configurations des figures 2 à 5.

On note que, dans la configuration de la figure 5, un contact étanche entre les pièces 140 et 1 est obtenu, alors même qu'aucun écoulement n'a encore eu lieu, ce qui est un gage de sécurité intrinsèque du dispositif.

Dans la configuration de la figure 5, les billes 141 sont en regard d'un renfoncement 144 ménagé dans le corps 102, ce qui permet de désolidariser en translation les éléments 102 et 140.

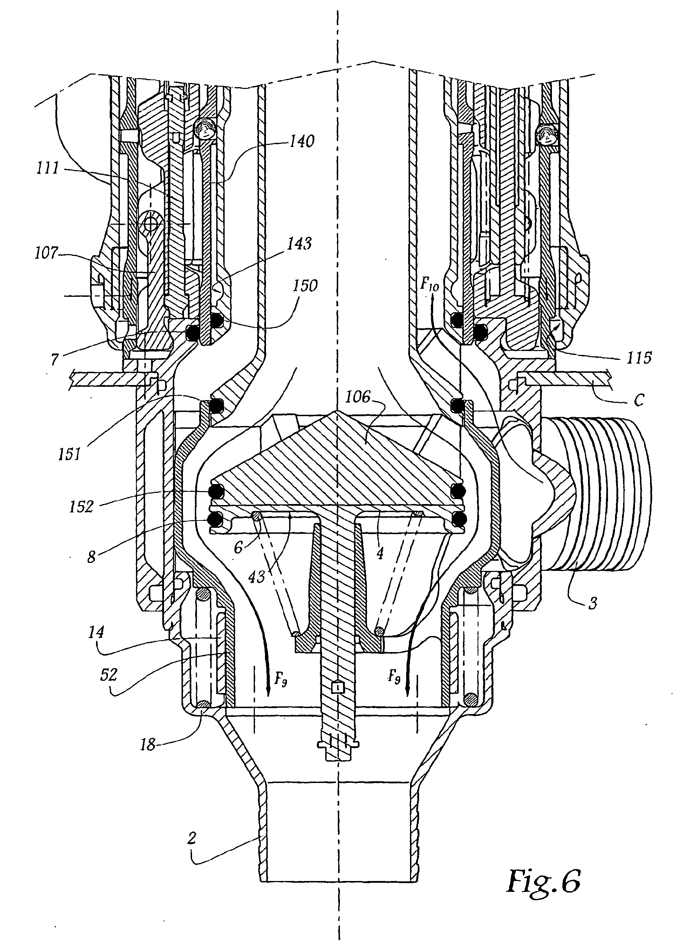

Si l'on poursuit l'application des efforts F₅ et F₆ sur les poignées 120 et 121, la poursuite des mouvements de la bague 102 en direction de l'about A a pour effet de repousser, grâce au poussoir 106, le clapet 4 à l'encontre de l'effort élastique généré par le ressort 6. Lorsque le ressort 6 est comprimé, ceci a également pour effet de déplacer la douille 5 jusque dans la configuration de la figure 6 où sa partie 52 obture les ouvertures 17 ménagées entre le manchon 14 et un voile annulaire 18 du corps 1. Ainsi, la douille 5 isole l'un par rapport à l'autre les piquages 2 et 3, c'est-à-dire les tubes T₁ et T₂.

Du fait du mouvement de la bague 102, sa partie divergente 105a vient en regard de la partie de la douille 5 préalablement disposée entre les joints 7 et 8, de sorte qu'il est créé une communication entre le canal C₁ et le piquage 2 autour du poussoir 6 et du clapet 4, ainsi qu'une communication entre le piquage 3 et le canal C₂ autour de la cloison 105.

L'écoulement de carburant a lieu comme représenté par les flèches F₉ à la figure 6, alors que l'écoulement des évents a lieu comme représenté par les flèches F₁₀.

Des ressorts de rappel 160 sont disposés entre le corps 101 et la bague 102, de sorte que, en cas de suppression des efforts F₅ et F₆, ces ressorts font suivre à la bague de commande 102 un mouvement inverse à celui précédemment décrit, ce qui conduit à une déconnexion des éléments A et E. En d'autres termes, le dispositif de l'invention peut être considéré comme équipé d'un système « d'homme mort », les ressorts 160 assurant une déconnexion automatique en cas d'arrêt de l'action de l'opérateur.

Parmi les avantages du dispositif de l'invention, on peut noter que l'about A peut être une pièce très légère et qui ne fait pas saillie sur une hauteur importante par rapport à la carrosserie C, de sorte qu'elle ne risque pas de blesser un opérateur ou un pilote.

Par ailleurs, dans la configuration de la figure 6, la section d'écoulement du carburant est importante, ce qui permet un grand débit de remplissage du réservoir R. En pratique, un débit de l'ordre de 90 litres en 28 secondes peut être atteint.

Compte tenu de sa structure, l'élément E est léger, alors qu'il présente une bonne ergonomie, notamment du fait du mode d'actionnement des poignées 120 et 121.

Compte tenu des caractéristiques du dispositif 1, il existe très peu de chances que des fuites ou des égouttures se produisent au niveau des surfaces en contact des éléments A et E, alors que ces éléments sont particulièrement robustes. Enfin, et de façon essentielle, les risques de fausse manoeuvre sont écartés, même si l'opérateur intervient dans des conditions de stress intense au cours d'une compétition sportive.

## Revendications

1. Dispositif de remplissage de réservoir de véhicule en carburant liquide., ledit dispositif comprenant un about embarqué sur le véhicule, relié audit réservoir au moins par un conduit de déversement et pourvu d'un clapet d'obturation, et un élément de remplissage apte à être raccordé audit about, **caractérisé en ce que** ledit élément de remplissage (E) est pourvu d'au moins un organe (111) de détection de l'appui dudit élément de remplissage sur une partie fixe (1) dudit about (A), ledit organe étant apte, lorsque ledit élément de remplissage est en appui sur ladite partie fixe, à commander le déplacement d'un crochet (107) de verrouillage dudit élément sur ledit about, entre une première position où ledit crochet est dégagé par rapport audit about et une seconde position où ledit crochet est en prise sur ledit about.

2. Dispositif selon la revendication 1, **caractérisé en ce qu'**il comprend plusieurs organes de détection (111) répartis autour d'un axe central (X_{E}-X'_{E}) dudit élément de remplissage et aptes, chacun, à commander un crochet de verrouillage (107).

3. Dispositif selon l'une des revendications précédentes, **caractérisé en ce que** ledit ou chaque organe de détection est en forme de doigt (111) mobile en translation selon une direction globalement parallèle à un axe central (X_{E}-X'_{E}) dudit élément de remplissage (E).

4. Dispositif selon l'une des revendications précédentes, **caractérisé en ce que** ledit ou chaque crochet de verrouillage (107) est apte à empêcher le déplacement d'une bague de verrouillage (110) lorsqu'il n'est pas en prise avec ledit about (A), ladite bague étant elle-même apte à empêcher le déplacement d'un organe (102) de commande faisant partie dudit élément de remplissage (E) et mobile par rapport au corps (101) dudit élément selon une direction parallèle à un axe central (X_{E}-X'_{E}) dudit élément.

5. Dispositif selon la revendication 4, **caractérisé en ce que** ladite bague de verrouillage (110) est apte à entourer ledit ou lesdits crochets (107) lorsque ledit ou lesdits crochets est ou sont dans ladite seconde position.

6. Dispositif selon l'une des revendications 4 ou 5, **caractérisé en ce que** la liaison cinématique entre ladite bague de verrouillage (110) et ledit organe de commande (102) est fonction de la position dudit organe de commande par rapport audit corps (101).

7. Dispositif selon la revendication 6, **caractérisé en ce qu'**il comprend au moins un élément (113) de blocage du mouvement relatif de ladite bague de verrouillage (110) et dudit organe de commande (102), ledit élément de blocage étant reçu dans un logement (114) ménagé à cet effet dans ladite bague et apte à être partiellement engagé ou non dans un logement (115) ménagé à cet effet dans ledit organe de commande.

8. Dispositif selon l'une des revendications 4 à 7, **caractérisé en ce que** l'élément de remplissage (E) comprend un tiroir (140) en forme de manchon tubulaire apte à venir en appui contre un joint (7) prévu sur une surface radiale interne dudit about (A), le déplacement dudit tiroir par rapport audit corps dudit élément étant commandé par ledit organe de commande (102).

9. Dispositif selon la revendication 8, **caractérisé en ce que** la liaison cinématique entre ledit tiroir (140) et ledit organe de commande (102) est fonction de la position dudit organe de commande (102) par rapport audit corps (101).

10. Dispositif selon l'une des revendications précédentes, **caractérisé en ce que** ledit about (A) est pourvu d'une gorge périphérique externe (15) de réception d'une partie (107a) dudit ou desdits crochets (107) lorsqu'il est ou ils sont dans ladite seconde position.

11. Dispositif selon l'une des revendications précédentes, **caractérisé en ce que** ledit about (A) est relié audit réservoir (R) par un conduit (2, T₁) d'écoulement de carburant et par un conduit (3, T₂) de circulation d'évents, alors qu'un organe mobile (5) est apte à passer, à l'intérieur dudit about, d'une première configuration où ledit organe mobile permet une communication fluidique (F₁) entre lesdits conduits et une seconde configuration ou ledit organe isole lesdits conduits l'un de l'autre.

12. Dispositif selon la revendication 11, **caractérisé en ce que** ledit organe mobile (5) est apte à être déplacé de ladite première vers ladite seconde configuration par une partie (106) dudit élément de remplissage (E).

13. Dispositif selon l'une des revendications 4 à 9 et selon la revendication 12, **caractérisé en ce que** ledit organe mobile (5) est apte à être déplacé de ladite première vers ladite seconde configuration par un poussoir (106) solidaire dudit organe de commande (102) et apte à repousser ledit clapet (4) dudit about à l'encontre de moyens élastiques (6) de fermeture, ledit clapet étant lui-même apte à déplacer ledit organe mobile.

14. Dispositif selon l'une des revendications précédentes, **caractérisé en ce que** ledit élément de remplissage (E) forme deux conduits (C₁, C₂, T'₁, T'₂) dédiés respectivement à l'écoulement de carburant vers ledit réservoir et à la circulation d'évents provenant dudit réservoir, ledit about étant lui-même raccordé audit réservoir par deux conduits (2, 3, T₁, T'₂) dédiés respectivement à l'écoulement de carburant et à la circulation d'évents, lesdits conduits d'écoulement de carburant étant aptes à être fluidiquement raccordés (F₉), alors que lesdits conduits de circulation d'évents sont aptes à être fluidiquement raccordés (F₁₀).

15. Dispositif selon l'une des revendications précédentes, **caractérisé en ce que** les mouvements des parties (102, 110, 140) dudit élément de remplissage (E) qui sont mobiles par rapport au corps (101) dudit élément sont commandés par au moins une poignée (120, 121) articulée sur ledit corps autour d'un axe (122) globalement orthogonal aux directions de déplacement desdites parties mobiles par rapport audit corps.

16. Dispositif selon la revendication 15, **caractérisé en ce que** ladite poignée (120, 121) est équipée d'un galet (123, 124) de transmission d'effort (F₇, F₈) à l'une (102) desdites parties mobiles (102, 110, 140), ledit galet étant reçu avec possibilité de déplacement (F₅) dans un logement (125, 126) de forme correspondante ménagé dans ladite partie mobile.

17. Dispositif selon l'une des revendications précédentes, **caractérisé en ce qu'**il comprend des moyens (6, 112, 160) de rappel élastique de certaines (102, 111) au moins des parties dudit élément de remplissage mobiles par rapport à son corps (101) et/ou de certaines (4) au moins des parties dudit about mobiles par rapport à ladite partie fixe (1) vers des configurations de fermeture et de séparation dudit élément et dudit about.

## Claims

1. Device for filling the tank of a vehicle with liquid fuel, said device comprising one end on board the vehicle, connected to said tank at least by one discharge conduit and provided with a sealing valve, and a filling element which is able to be connected to said end, **characterised in that** said filling element (E) is provided with at least one member (111) for detecting the abutment of said filling element on a fixed part (1) of said end (A), said member being able, when said filling element is abutting on said fixed part, to control the displacement of a locking hook (107) of said element on said end, between a first position where said hook is disengaged relative to said end and a second position where said hook is engaged on said end.

2. Device according to claim 1, **characterised in that** it comprises a plurality of detection members (111) distributed about a central axis (X_{E}- X'_{E}) of said filling element and each able to control one locking hook (107).

3. Device according to one of the preceding claims, **characterised in that** said or each detection member is in the form of a finger (111) which is moveable in translation according to a direction which overall is parallel to a central axis (X_{E}- X'_{E}) of said filling element (E).

4. Device according to one of the preceding claims, **characterised in that** said or each locking hook (107) is able to prevent the displacement of a locking ring (110) when it not engaged with said end (A), said ring being itself able to prevent the displacement of a control member (102) which forms part of said filling element (E) and is moveable relative to the body (101) of said element according to a direction which is parallel to a central axis (X_{E} - X_{E}') of said element.

5. Device according to claim 4, **characterised in that** said locking ring (110) is able to surround the hook or hooks (107) when said hook or hooks is or are in said second position.

6. Device according to one of the claims 4 or 5, **characterised in that** the kinematic link between said locking ring (110) and said control member (102) is a function of the position of said control member relative to said body (101).

7. Device according to claim 6, **characterised in that** it comprises at least one element (113) for blocking relative movement of said locking ring (110) and of said control member (102), said blocking element being received in a housing (114) which is provided for this purpose in said ring and is able to be partially engaged or not in a housing (115) provided for this purpose in said control member.

8. Device according to one of the claims 4 to 7, **characterised in that** the filling element (E) comprises a slide (140) in the form of a tubular sleeve which is able to be brought to abut against a gasket (7) which is provided on an internal radial surface of said end (A), the displacement of said slide relative to said body of said element being controlled by said control member (102).

9. Device according to claim 8, **characterised in that** the kinematic link between said slide (140) and said control member (102) is a function of the position of said control member (102) relative to said body (101).

10. Device according to one of the preceding claims, **characterised in that** said end (A) is provided with an external peripheral groove (15) for receiving a part (107a) of said hook or hooks (107) when it is or they are in said second position.

11. Device according to one of the preceding claims, **characterised in that** said end (A) is connected to said tank (R) by a conduit (2, T₁) for the flow of fuel and by a conduit (3, T₃) for the venting circulation, when a moveable member (5) is able to pass, inside said end, from a first configuration where said moveable member allows fluid communication (F₁) between said conduits and a second configuration where said member isolates said conduits one from the other.

12. Device according to claim 11, **characterised in that** said moveable member (5) is able to be displaced from said first towards said second configuration by a part (106) of said filling element (E).

13. Device according to one of the claims 4 to 9 and according to claim 12, **characterised in that** said moveable member (5) is able to be displaced from said first towards said second configuration by a thrustor (106) which is integral with said control member (102) and able to push back said valve (4) of said end in opposition to resilient closure means (6), said valve being itself able to displace said moveable member.

14. Device according to one of the preceding claims, **characterised in that** said filling element (E) forms two conduits (C₁, C₂, T'₁, T'₂) which are dedicated respectively to the flow of fuel towards said tank and the venting circulation coming from said tank, said end being itself connected to said tank by two conduits (2, 3, T₁, T'₂) which are dedicated respectively to the flow of fuel and to the venting circulation, said conduits for the flow of fuel being available for fluid connection (F₉), when said conduits for the venting circulation are available for fluid connection (F₁₀).

15. Device according to one of the preceding claims, **characterised in that** the movements of the parts (102, 110, 140) of said filling element (E) which are moveable relative to the body (101) of said element are controlled by at least one handle (120, 121) which is articulated on said body about an axis (122) which is overall orthogonal to the displacement directions of said parts which are moveable relative to said body.

16. Device according to claim 15, **characterised in that** said handle (120, 121) is equipped with a roller (123, 124) for transmitting force (F₇, F₈) to one (102) of said moveable parts (102, 110, 140), said roller being received with the possibility of displacement (F₅) into a housing (125, 126) of a corresponding shape which is provided in said moveable part.

17. Device according to one of the preceding claims, **characterised in that** it comprises resilient return means (6, 112, 160) for certain (102, 111) at least of the parts of said filling element which are moveable relative to its body (101) and/or for certain (4) at least of the parts of said end which are moveable relative to said fixed part (1) towards configurations for closure and for separation of said element and said end.

## Patentansprüche

1. Vorrichtung zum Befüllen des Tanks eines Fahrzeugs mit flüssigem Kraftstoff, wobei die Vorrichtung einen an Bord des Fahrzeugs mitgeführten Stutzen, welcher mit dem Tank zumindest durch eine Einfüllleitung verbunden ist und mit einem Schließventil versehen ist, und ein Betankungselement aufweist, das dazu geeignet ist, an den Stutzen angeschlossen zu werden,
**dadurch gekennzeichnet,**
**daß** das Betankungselement (E) mit mindestens einem Organ (111) zum Detektieren der Anlage des Betankungselementes an einem festen Teil (1) des Stutzens (A) versehen ist, wobei das Organ dazu geeignet ist, während seiner Anlage an dem festen Teil die Verschiebung eines Hakens (107) für die Verriegelung des Elementes an dem Stutzen zwischen einer ersten Position, in der der Haken in Bezug auf den Stutzen gelöst ist, und einer zweiten Position zu steuern, in der der Haken an dem Stutzen in Eingriff steht.

2. Vorrichtung nach Anspruch 1,
**dadurch gekennzeichnet,**
**daß** sie mehrere Detektierungsorgane (111) aufweist, die um eine Mittelachse (X_{E}-X'_{E}) des Betankungselementes verteilt sind und jeweils zum Steuern eines Verriegelungshakens (107) geeignet sind.

3. Vorrichtung nach einem der vorhergehenden Ansprüche,
**dadurch gekennzeichnet,**
**daß** das bzw. jedes Detektierungsorgan die Form eines Fingers (111) aufweist, der in einer Translation in einer zu einer Mittelachse (X_{E}-X'_{E}) des Betankungselementes (E) im wesentlichen parallelen Richtung beweglich ist.

4. Vorrichtung nach einem der vorhergehenden Ansprüche,
**dadurch gekennzeichnet,**
**daß** der bzw. jeder Verriegelungshaken (107) dazu geeignet ist, die Verschiebung eines Verriegelungsrings (110) zu verhindern, wenn er sich nicht in Eingriff mit dem Stutzen (A) befindet, wobei dieser Ring wiederum in der Lage ist, die Verschiebung eines Steuerorgans (102) zu verhindern, das Teil des Betankungselementes (E) ist und in Bezug auf den Körper (101) des Elementes in einer zu einer Mittelachse (X_{E}-X'_{E}) des Elementes parallelen Richtung beweglich ist.

5. Vorrichtung nach Anspruch 4,
**dadurch gekennzeichnet,**
**daß** der Verriegelungsring (110) in der Lage ist, den oder die Haken (107) zu umgreifen, wenn sich der Haken in der zweiten Position befindet bzw. wenn sich die Haken in der zweiten Position befinden.

6. Vorrichtung nach einem der Ansprüche 4 oder 5,
**dadurch gekennzeichnet,**
**daß** die kinematische Verbindung zwischen dem Verriegelungsring (110) und dem Steuerorgan (102) durch die Position des Steuerorgans in Bezug auf den Körper (101) bedingt ist.

7. Vorrichtung nach Anspruch 6,
**dadurch gekennzeichnet,**
**daß** sie mindestens ein Element (113) zum Blockieren der Relativbewegung des Verriegelungsrings (110) und des Steuerorgans (102) aufweist, wobei das Blokkierelement in einer Aufnahme (114) aufgenommen ist, die zu diesem Zweck in dem Ring vorgesehen ist und dazu geeignet ist, teilweise in einer Aufnahme (115) einzugreifen oder nicht einzugreifen, die zu diesem Zweck in dem Steuerorgan vorgesehen ist.

8. Vorrichtung nach einem der Ansprüche 4 bis 7,
**dadurch gekennzeichnet,**
**daß** das Betankungselement (E) einen Schieber (140) in Form einer rohrförmigen Hülse aufweist, der dazu geeignet ist, sich an einer Dichtung (7) abzustützen, die an einer radialen Innenfläche des Stutzens (A) vorgesehen ist, wobei die Verschiebung des Schiebers in Bezug auf den Körper des Elementes von dem Steuerorgan (102) gesteuert wird.

9. Vorrichtung nach Anspruch 8,
**dadurch gekennzeichnet,**
**daß** die kinematische Verbindung zwischen dem Schieber (140) und dem Steuerorgan (102) durch die Position des Steuerorgans (102) in Bezug auf den Körper (101) bedingt ist.

10. Vorrichtung nach einem der vorhergehenden Ansprüche,
**dadurch gekennzeichnet,**
**daß** der Stutzen (A) mit einer Außenumfangsnut (15) zum Aufnehmen eines Teils (107a) des Hakens bzw. der Haken (107) versehen ist, wenn dieser/diese sich in der zweiten Position befindet/befinden.

11. Vorrichtung nach einem der vorhergehenden Ansprüche,
**dadurch gekennzeichnet,**
**daß** der Stutzen (A) mit dem Tank (R) durch eine Kraftstoffströmungsleitung (2, T₁) und durch eine Gasrückführungsleitung (3, T₂) verbunden ist, während ein bewegliches Organ (5) dazu geeignet ist, sich im Inneren des Stutzens aus einer ersten Konfiguration, in der das bewegliche Organ eine Fluidverbindung (F₁) zwischen den Leitungen ermöglicht, und einer zweiten Konfiguration zu verstellen, in der das Organ die Leitungen voneinander trennt.

12. Vorrichtung nach Anspruch 11,
**dadurch gekennzeichnet,**
**daß** das bewegliche Organ (5) dazu geeignet ist, durch einen Teil (106) des Betankungselementes (E) von der ersten in die zweite Konfiguration verschoben zu werden.

13. Vorrichtung nach einem der Ansprüche 4 bis 9 und nach Anspruch 12,
**dadurch gekennzeichnet,**
**daß** das bewegliche Organ (5) dazu geeignet ist, von der ersten in die zweite Konfiguration durch eine Druckeinrichtung (106) verschoben zu werden, die fest mit dem Steuerorgan (102) verbunden ist und dazu geeignet ist, das Ventil (4) des Stutzens gegen elastische Schließeinrichtungen (6) zu drücken, wobei das Ventil wiederum dazu geeignet ist, das bewegliche Organ zu verschieben.

14. Vorrichtung nach einem der vorhergehenden Ansprüche,
**dadurch gekennzeichnet,**
**daß** das Betankungselement (E) zwei Leitungen (C₁, C₂, T'₁, T'₂) bildet, die speziell für das Strömen von Kraftstoff zum Tank bzw. zum Rückführen von aus dem Tank stammenden Kraftstoffdämpfen vorgesehen sind, wobei der Stutzen wiederum an den Tank durch zwei Leitungen (2, 3, T₁, T'₂) angeschlossen ist, die speziell für das Strömen von Kraftstoff bzw. zum Rückführen von Kraftstoffdämpfen vorgesehen sind, wobei die Kraftstoffströmungsleitungen dazu geeignet sind, in Fluidverbindung (F₉) angeschlossen zu werden, während die Gasrückführungsleitungen dazu geeignet sind, in Fluidverbindung (F₁₀) angeschlossen zu werden.

15. Vorrichtung nach einem der vorhergehenden Ansprüche,
**dadurch gekennzeichnet,**
**daß** die Bewegungen der Teile (102, 110, 140) des Betankungselementes (E), die in Bezug auf den Körper (101) des Elementes beweglich sind, von mindestens einem Griffteil (120, 121) gesteuert werden, das derart an dem Körper angebracht ist, daß es um eine Achse (122) verschwenkbar ist, die zu den Richtungen der Verschiebung der in Bezug auf den Körper beweglichen Teile im wesentlichen orthogonal ist.

16. Vorrichtung nach Anspruch 15,
**dadurch gekennzeichnet,**
**daß** das Griffteil (120, 121) mit einer Rolle (123, 124) zum Übertragen von Kräften (F₇, F₈) auf eines (102) der beweglichen Teile (102, 110, 140) versehen ist, wobei die Rolle mit der Möglichkeit einer Verschiebung (F₅) in einer Aufnahme (125, 126) mit einer entsprechenden Form aufgenommen ist, die in dem beweglichen Teil vorgesehen ist.

17. Vorrichtung nach einem der vorhergehenden Ansprüche,
**dadurch gekennzeichnet,**
**daß** sie Einrichtungen (6, 112, 160) zum elastischen Rückstellen zumindest von bestimmten Teilen (102, 111) der Teile des Betankungselementes, die in Bezug auf dessen Körper (101) beweglich sind, und/oder zumindest von bestimmten Teilen (4) der Teile des Stutzens, die in Bezug auf den ortsfesten Teil (1) beweglich sind, in Konfigurationen zum Verschließen und Trennen des Elementes und des Stutzens aufweist.
